# EUROPÄISCHE PATENTSCHRIFT

(11) **EP 2 035 495 B1**
(45) Veröffentlichungstag und Bekanntmachung des Hinweises auf die Patenterteilung: **04.09.2019**
(21) Anmeldenummer: 07786786.9
(22) Anmeldetag: 21.06.2007
(51) Int. Cl.: C08K 3/30, C08K 9/00

(54) **ZINKSULFID ENTHALTENDER KUNSTSTOFF**
PLASTIC COMPRISING ZINC SULPHIDE
MATIÈRE PLASTIQUE CONTENANT DU SULFURE DE ZINC

(30) Priorität: 21.06.2006 DE 102006028896
(43) Veröffentlichungstag der Anmeldung: 18.03.2009
(73) Patentinhaber: Venator Germany GmbH, 47198 Duisburg (DE)
(72) Erfinder: DAVID, Stéphane, 40625 Düsseldorf (DE); FRITZEN, Petra, 47443 Moers (DE); HEIMING, Ludger, 46487 Wesel (DE); RENTSCHLER, Thomas, 64625 Bensheim (DE)
(74) Vertreter: Nobbe, Matthias
(86) Internationale Anmeldenummer: PCT/EP2007/056192
(87) Internationale Veröffentlichungsnummer: WO 2007/147871

(56) Entgegenhaltungen:
- US-A1- 2005 042 453
- DATABASE WPI Week 199533 Derwent Publications Ltd., London, GB; AN 1995-252409 XP002448034 & JP 07 157650 A (MITSUBISHI GAS CHEM CO INC) 20. Juni 1995 (1995-06-20)
- DATABASE WPI Week 200430 Derwent Publications Ltd., London, GB; AN 2004-320614 XP002448035 & JP 2004 059690 A (ASAHI KASEI KK) 26. Februar 2004 (2004-02-26)
- Paper eingereicht in die "Proceedings of the 58th international Wire & Cable Symposium IWCS/IICIT" 2009

## Beschreibung

Gegenstand der vorliegenden Erfindung ist ein Zinksulfid enthaltender Kunststoff und dessen Verwendung.

Die Erfindung betrifft außerdem die Verbesserung der Thermostabilität von Kunststoffen, insbesondere von thermoplastischen und elastomeren Kunststoffen, durch den Einsatz von Zinksulfid, insbesondere in Kombination mit organischen Antioxidantien und organischen Metalldesaktivatoren.

Kunststoffe, insbesondere thermoplastische und elastomere Kunststoffe, werden zunehmend in Anwendungen mit hohen Anforderungen an die Lebensdauer eingesetzt. Beispielhaft sind folgende Anwendungen zu nennen: Kabelisolierungen, Warmwasserrohre, beispielsweise für Fußbodenheizung, Schläuche in Waschmaschinen und Geschirrspülern, sowie Pumpengehäusen. Zum Einsatz in diesen Anwendungen kommen vor allem Kunststoffe auf der Grundlage von Polymeren wie Polyethylen (PE) und Polypropylen (PP). Anwendungen für elastomere Kunststoffe, beispielsweise auf der Grundlage von Polymeren wie Styrol-Butadien-Kautschuk (SBR), sind beispielsweise Dichtungen und Schwingungsdämpfer. Die Kunststoffe sind verschiedenen Beanspruchungen während ihrer Verarbeitung und in der Endanwendung ausgesetzt, die entscheidenden Einfluss auf die Lebensdauer des Kunststoffes haben. Mechanische Belastung, Temperatur und UV-Licht führen zu einer Schädigung des Polymers, so dass sich visuelle und mechanische Eigenschaften verschlechtern, das heißt, es tritt beispielsweise Vergilbung und Versprödung auf.

Die JP-A-7157650 offenbart thermoplastische Zusammensetzungen die Zinksulfid mit einer mittleren Teilchengröße von 20-1000 nm als thermostabilisierenden Zusatz enthalten.

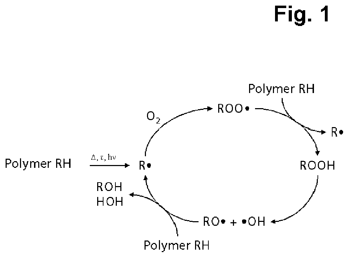

Wesentliche Bedeutung beim Polymerabbau hat die in Fig. 1 schematisch dargestellte Autoxidation (Autoxidationzyklus). Einwirkung von Wärme, UV-Licht oder Scherbeanspruchung während der Verarbeitung führt zur Spaltung der Polymerketten und zur Bildung von Radikalen R•. In Gegenwart von Luftsauerstoff entstehen Peroxyradikale ROO•, die mit dem Polymer RH zum Hydroperoxid ROOH abreagieren. Beim Zerfall des Hydroperoxides entstehen als Reaktionsprodukte die Radikale RO• und •OH, die zum weiteren Abbau des Polymers beitragen.

Der homolytische Zerfall des Hydroperoxides ROOH in die Radikale RO• und •OH ist für die Autoxidation Geschwindigkeits-bestimmend, da eine hohe Aktivierungsenergie benötigt wird und die Reaktion erst ab Temperaturen von 150°C statt findet. Die Gegenwart katalytischer Mengen von Schwermetallionen setzt die Aktivierungsenergie herab und ermöglicht, dass der Zerfall des Hydroperoxides bereits bei Raumtemperatur stattfinden kann. Katalytisch aktiv sind solche Metalle, deren um eine Einheit verschiedene Oxidationsstufen eine vergleichbare Stabilität aufweisen. Hierzu gehören beispielsweise Cu⁺¹/Cu⁺², Fe⁺²/Fe⁺³, Co⁺²/Co⁺³ oder Mn⁺²/Mn⁺³. Der Redox-Prozess kann folgendermaßen beschrieben werden (A.J. Chalk und J. F. Smith, Trans. Farad. Soc. 53 (1957), S. 1214): 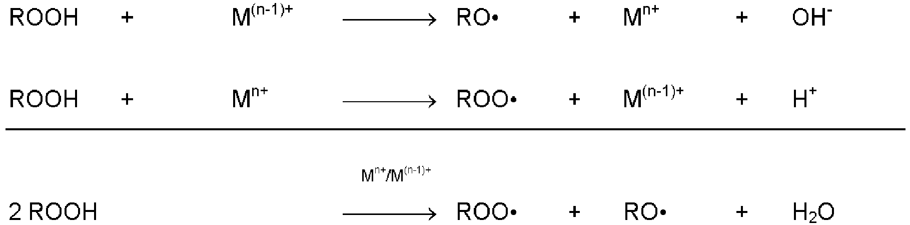 M = Fe, Cu, Mn, Co, Ce, V

Damit kommt den Schwermetallionen eine große Bedeutung für die Stabilität des Polymers zu. Schwermetallionen werden beispielsweise über mineralische Füllstoffe wie Talkum, Calciumcarbonat, Kaolin oder Bariumsulfat eingebracht. Diese Füllstoffe sollen beispielsweise die mechanischen Eigenschaften der Kunststoffe wie Schlagfestigkeit, Steifigkeit, Formbeständigkeit und Schalldämmung verbessern. Direkter Kontakt des Kunststoffes mit einem Schwermetall, insbesondere Kupfer, besteht beispielsweise in den Anwendungen Warmwasserrohre, wiederum beispielsweise in Fußbodenheizungen, und Kabelisolierungen.

Zur Erhöhung der Langzeitthermostabilität und Alterungsbeständigkeit von Kunststoffen, insbesondere von thermoplastischen und elastomeren Kunststoffen, wiederum insbesondere von Kunststoffen auf der Grundlage von Polyolefinen, werden zur Grundstabilisierung durch organische Antioxidantien (AO) zusätzlich Metalldesaktivatoren (MD) eingesetzt.

Als Antioxidantien werden typischerweise folgende Verbindungsklassen eingesetzt:
Sterisch gehinderte Phenole, sekundäre aromatische Amine, Aminophenole, Thioether, Phosphite und Phosphonite, sterisch gehinderte Amine, Epoxidverbindungen.

Als Metalldesaktivatoren werden typischerweise organische Verbindungen eingesetzt, die als Chelatbildner in der Lage sind, Schwermetallionen in Form von Metallkomplexen zu immobilisieren.

Es werden beispielsweise folgende Verbindungsklassen eingesetzt:
Carbonsäureamide, cyclische Amide, Hydrazone und Bishydrazone, Hydrazide, diacylierte Hydrazine, heterocyclische Verbindungen wie Melamin, Benzotriazole, 8-Oxychinolin, Hydrazone und acylierte Derivate von Hydrazinotriazinen, Polyhydrazide, sterisch gehinderte Phenole, Benzylphosphonsäure-Ni-Salze, Pyridinthiol-Sn-Verbindungen, tertiäre Phosphorigsäureester schwefelhaltiger Bisphenole, und/oder Thioether.

Problematisch ist, dass organische Metalldesaktivatoren aus der zu schützenden Polymermatrix wandern und damit an Wirksamkeit verlieren können. Des Weiteren kann die Wirksamkeit des organischen Metalldesaktivators durch Adsorption an der Oberfläche von Füllstoffen ebenfalls vermindert werden. Daher sind die auch die gemäß des Standes der Technik langzeitthermostabilisierten und alterungsbeständigen Kunststoffe einer vorzeitigen Verschlechterung der visuellen und mechanischen Eigenschaften unterworfen.

Jedoch ist für bestimmte Anwendungen von Kunststoffen, beispielsweise für Rohre für Fußbodenheizungen, eine deutlichere Erhöhung der Langzeitthermostabilität und Alterungsbeständigkeit gewünscht. Immerhin sollen diese Kunststoffrohre unter thermischer und mechanischer Wechselbelastung über Jahre und Jahrzehnte unbeschadet im Estrich eines Fußbodens überdauern.

Aufgabe der vorliegenden Erfindung ist es daher, die Nachteile des Standes der Technik zu überwinden. Insbesondere ist es Aufgabe der vorliegenden Erfindung, Kunststoffe bereitzustellen, die gegenüber dem Stand der Technik eine deutlich erhöhte Langzeitthermostabilität und/oder Alterungsbeständigkeit besitzen.

Erfindungsgemäß wird die Aufgabe überraschenderweise durch die Merkmale des Hauptanspruchs gelöst. Vorzugsweise Ausgestaltungen finden sich in den Unteransprüchen.

Dabei wird erfindungsgemäß die Aufgabe durch einen Kunststoff gelöst, der Zinksulfid enthält, das eine mittlere Korngröße d₅₀ von 1 bis 50 nm, insbesondere bevorzugt von 3 bis 20 nm, ganz besonders bevorzugt von 5 bis 15 nm und eine spezifische Oberfläche (BET) von 20 bis 300 m²/g hat.

Überraschenderweise wurde gefunden, dass Kunststoffe, die Zinksulfid in Kombination mit organischen Antioxidantien und Metalldesaktivatoren enthalten, eine deutlich erhöhte Langzeitthermostabilität und Alterungsbeständigkeit gegenüber gemäß dem Stand der Technik stabilisierten Kunststoffen aufweisen.

Insbesondere Gegenstand der vorliegenden Erfindung ist ein Zinksulfid enthaltender Kunststoff mit erhöhter Langzeitthermostabilität und/oder Alterungsbeständigkeit sowie dessen Verwendung.

Bei einem Kunststoff, der Zinksulfid mit einer mittleren Korngröße d₅₀ von 300 bis 350 nm (Sachtolith HD-S) in Kombination mit organischen Antioxidantien und Metalldesaktivatoren enthält, ist bereits eine um 50 % erhöhte Langzeitthermostabilität und Alterungsbeständigkeit gegenüber gemäß dem Stand der Technik stabilisierten Kunststoffen festzustellen. Ein Kunststoff, der Zinksulfid mit einer mittleren Korngröße d₅₀ von 1 bis 250 nm (ZnS (nano)) in Kombination mit organischen Antioxidantien und Metalldesaktivatoren enthält, weist eine um mehr als 100 % erhöhte Langzeitthermostabilität und Alterungsbeständigkeit gegenüber gemäß dem Stand der Technik stabilisierten Kunststoffen auf.

Ein solcher Kunststoff enthält erfindungsgemäß beispielsweise: 12 bis 99,8 Gew.-% Thermoplast, 0 bis 80 Gew.-% mineralischer Füllstoff, 0,05 bis 1,0 Gew.-% Antioxidant, 0,05 bis 2,0 Gew.-% organischer Metalldesaktivator und 0,1 bis 5,0 Gew-% ZnS (nano).

Weiterhin konnte die Geschwindigkeit des Elastizitätsverlustes eines elastomeren Kunststoffes, beispielsweise auf Grundlage eines Styrol-Butadien-Kautschuks (SBR), bei hoher Temperatur durch den Zusatz von Zinksulfid mit einer mittleren Korngröße d₅₀ von 1 bis 250 nm (ZnS (nano)) reduziert werden.

In einer erfindungsgemäßen Ausführung enthält ein solcher elastomerer Kunststoff beispielsweise 100 phr Elastomer, 0 bis 10 phr Vulkanisationsbeschleuniger, 0 bis 10 phr Vulkanisationsverzögerer, 0 bis 20 phr Zinkoxid, 0 bis 10 phr Stearinsäure, 0 bis 20 phr Schwefel und/oder Peroxid, 0 bis 300 phr mineralischer Füllstoff, 0 bis 200 phr Weichmacher, 0 bis 30 phr protective system, enthaltend beispielsweise Antioxidantien und Antiozonantien, und 0,1 bis 10 phr, bevorzugt 0,5 bis 7, besonders bevorzugt 2 bis 5 phr ZnS (nano). Wie bei Elastomeren üblich und dem Fachmann bekannt sind die Anteile der Komponenten in phr (parts per hundred resin) angegeben.

Es wird angenommen, dass die Sulfidanionen des Zinksulfids mit den Schwermetallionen schwerlösliche Schwermetallsulfide bilden, die im Kunststoff nicht wandern. Damit stehen die Schwermetallionen nur sehr eingeschränkt als Katalysator für die Autoxidation des Polymers zur Verfügung.

Die Herstellung der erfindungsgemäßen Kunststoffe erfolgt mit Verfahren gemäß dem Stand der Technik.

Gegenstand der Erfindung ist im Einzelnen:
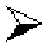 ein Kunststoff, der Zinksulfid enthält, wobei:
   - das Zinksulfid:
      - eine mittlere Korngröße d₅₀ von 1 bis 50 nm, insbesondere bevorzugt von 3 bis 20 nm, ganz besonders bevorzugt von 5 bis 15 nm hat;
      - eine spezifische Oberfläche (BET) von 20 bis 300 m²/g, bevorzugt von 50 bis 180 m²/g hat;
      - eine anorganische und/oder eine organische Oberflächenmodifizierung besitzt, wobei:
         ∘ die anorganische Oberflächenmodifizierung des Zinksulfids aus einer Verbindung besteht, die mindestens zwei der folgenden Elemente enthält: Aluminium, Antimon, Barium, Calcium, Cer, Chlor, Cobalt, Eisen, Phosphor, Kohlenstoff, Mangan, Sauerstoff, Schwefel, Silizium, Stickstoff, Strontium, Vanadium, Zink, Zinn, Zirkon;
         ∘ die organische Oberflächenmodifizierung aus mindestens einer der folgenden Substanzklassen ausgewählt ist: Polyethern, Siloxanen, Polysiloxanen, Polycarbonsäuren, Polyestern, Polyamiden, Polyethylenglykolen, Polyalkoholen, Fettsäuren, bevorzugt ungesättigten Fettsäuren, Polyacrylaten;
      - mit einem Anteil von 0,1 bis 5 Gew.-%, bevorzugt 0,2 bis 2 Gew.-%, besonders bevorzugt 0,5 bis 1,5 Gew.-% im fertigen Kunststoff vorliegt;
   - es sich bei dem Kunststoff um einen thermoplastischen Kunststoff handelt, wobei:
      - der Thermoplast vorzugsweise ausgewählt ist aus: Polyethylen (PE), Polypropylen (PP), Polybutylen (PB), Poylamid (PA), Poylvinylchlorid (PVC), Acrylnitril-Butadien-Styrol-Terpolymer (ABS), Polymethylmethacrylat (PMMA), Polycarbonat (PC), Polyoxymethylen (POM), Poylbutylenterephthalat (PBT), Polyurethan (PUR) oder Mischungen von mindestens zwei dieser Kunststoffe;
      - der thermoplastische Kunststoff 12 bis 99,8 Gew.-% Thermoplast, 0 bis 80 Gew.-% mineralischen Füllstoff, 0 bis 80 Gew.-% Flammschutzmittel, 0,05 bis 1,0 Gew.-% Antioxidant, 0,05 bis 2,0 Gew.-% organischen Metalldesaktivator und 0,1 bis 5 Gew.-%, bevorzugt 0,2 bis 2 Gew.-%, besonders bevorzugt 0,5 bis 1,5 Gew.-% Gew-% ZnS (nano) enthält;
   - es sich bei dem Kunststoff um einen elastomeren Kunststoff handelt, wobei:
      - das Elastomer vorzugsweise ausgewählt ist aus: Naturkautschuk (NR), Isopren-Kautschuk (IR), Butyl-Kautschuk (CIIR, BIIR), Butadien-Kautschuk (BR), Styrol-Butadien-Kautschuk (SBR), Acrylnitril-Butadien-Kautschuk (NBR), Brombutyl-Kautschuk (BIIR), Styrol-Butadien-Isopren-Kautschuk (SBIR), Chloropren-Kautschuk (CR), chlorsulfonierter Polyethylen-Kautschuk (CSM), hydrierter NBR-Kautschuk (HNBR), Polymethylsiloxan-Vinyl-Kautschuk (VMQ), Acrylat-Ethylen-Kautschuk (AEM), Acrylat-Kautschuk (ACM), Fluor-Kautschuk (FKM), Fluorsilikon-Kautschuk (FVMQ), thermoplastischen Elastomeren (TPE), thermoplastischen Elastomeren (TPE) auf Basis von Polyamid (TPA), auf Basis von Copolyestern (TPC), auf Basis von Olefinen (TPO), auf Basis von Styrol (TPS), auf Basis von Polyurethan (TPU), auf Basis von vernetztem Kautschuk (TPV) oder Mischungen von mindestens zwei dieser Kunststoffe;
      - der elastomere Kunststoff 100 phr Elastomer, 0 bis 10 phr Vulkanisationsbeschleuniger, 0 bis 10 phr Vulkanisationsverzögerer, 0 bis 20 phr Zinkoxid, 0 bis 10 phr Stearinsäure, 0 bis 20 phr Schwefel und/oder Peroxid, 0 bis 300 phr mineralischen Füllstoff, 0 bis 200 phr Weichmacher, 0 bis 30 phr protective system, enthaltend vorzugsweise Antioxidantien und Antiozonantien, und 0,1 bis 10 phr, bevorzugt 0,5 bis 7, besonders bevorzugt 2 bis 5 phr ZnS (nano) enthält;
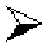 die Verwendung des erfindungsgemäßen Kunststoffes:
   - in thermisch belasteten Systemen;
   - in Systemen, in denen der Kunststoff in unmittelbaren Kontakt mit Metall und/oder Wasser steht;
   - zur Herstellung von Kabelisolierungen, Pumpengehäusen, Dichtungen und Schwingungsdämpfern, Warmwasserrohen, beispielsweise für Fußbodenheizungen, sowie Schläuchen in Waschmaschinen und Geschirrspülern;
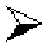 ein Masterbatch, der Zinksulfid enthält, zur Herstellung eines erfindungsgemäßen
Kunststoffes, wobei;
   - das Zinksulfid:
      - eine mittlere Korngröße d₅₀ von 1 bis 50 nm, insbesondere bevorzugt von 3 bis 20 nm, ganz besonders bevorzugt von 5 bis 15 nm hat;
      - eine spezifische Oberfläche (BET) von 20 bis 300 m²/g, bevorzugt von 50 bis 180 m²/g hat;
      - eine anorganische und/oder eine organische Oberflächenmodifizierung besitzt, wobei:
         ∘ die anorganische Oberflächenmodifizierung des Zinksulfids aus einer Verbindung besteht, die mindestens zwei der folgenden Elemente enthält: Aluminium, Antimon, Barium, Calcium, Cer, Chlor, Cobalt, Eisen, Phosphor, Kohlenstoff, Mangan, Sauerstoff, Schwefel, Silizium, Stickstoff, Strontium, Vanadium, Zink, Zinn, Zirkon;
         ∘ die organische Oberflächenmodifizierung aus mindestens einer der folgenden Substanzklassen ausgewählt ist: Polyethern, Siloxanen, Polysiloxanen, Polycarbonsäuren, Polyestern, Polyamiden, Polyethylenglykolen, Polyalkoholen, Fettsäuren, bevorzugt ungesättigten Fettsäuren, Polyacrylaten;
      - mit einem Anteil von 0,5 bis 25 Gew.-%, bevorzugt 1 bis 10 Gew.-%, besonders bevorzugt 2 bis 5 Gew.-% im Masterbatch vorliegt;
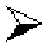 die Verwendung des erfindungsgemäßen Masterbatches zur Herstellung des erfindungsgemäßen Kunststoffes;
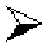 die Verwendung von Zinksulfid zur Erhöhung der Langzeitthermostabilität und/oder Alterungsbeständigkeit von Kunststoffen;
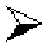 die Verwendung von Zinksulfid zur Erhöhung der Langzeitthermostabilität und/oder Alterungsbeständigkeit von mineralisch gefüllten Kunststoffen.

Die nachfolgenden Beispiele sollen die Erfindung näher erläutern, ohne sie dadurch einzuschränken.

Von den Ausgangskomponenten Sachtolith HD-S (d₅₀ 300 bis 350 nm) oder Zinksulfid (ZnS (nano)) und gegebenenfalls Talkum wurden erfindungsgemäße PP-Masterbatches gefertigt, beispielsweise: Talkum 25 Gew.-% in PP-H (Homopolymer), Sachtolith HD-S 50 Gew.-% in PP-H, ZnS (nano) (d₅₀ = 10 nm) 5 Gew.-% in PP-H. Außerdem wurden Masterbatches mit Rezepturen gemäß dem Stand der Technik gefertigt. Bei der Herstellung der Masterbatches wurde auf den Zusatz von Dispergierhilfsmitteln, Antioxidantien und Metalldesaktivatoren verzichtet.

Anschließend wurden neun verschiedene PP-Zusammensetzungen entsprechend der in Tabelle aufgeführten Rezepturen auf der Grundlage der zuvor gefertigten Masterbatches mit einem Brabender Einschneckenextruder gefertigt. Antioxidant und Metalldesaktivator wurden entsprechend der Rezeptur erst bei der Herstellung des Prüfmaterials als Pulver zugegeben.

Die Herstellung der Kunststoffe erfolgt mit Verfahren gemäß dem Stand der Technik.

**Tabelle 1: Rezepturen PP-Compounds**

| Rezeptur | | **Talkum [Gew.%]** | **AO¹⁾ [Gew.%]** | **MD²)** | **Sachtolith HD-S** | **ZnS (nano)** |
|---|---|---|---|---|---|---|
| 1 | O-Probe PP | - | - | - | - | - |
| 2 | PP/Talk | 20 | - | - | - | - |
| 3 | PP/Talk/ZnS | 20 | - | - | 4,5 | - |
| 4 | PP/Talk/AO/ZnS | 20 | 0,15 | - | 4,5 | - |
| 5 | PP/Talk/AO/MD | 20 | 0,15 | 0,3 | - | - |
| 6 | PP/Talk/AO/MD/ZnS | 20 | 0,15 | 0,3 | 4,5 | - |
| 7 | PP/AO/MD | - | 0,15 | 0,2 | - | - |
| 8 | PP/AO/MD/ZnS | - | 0,15 | 0,2 | - | 4,5 |
| 9 | PP/AO/MD/ZnS (nano) | - | 0,15 | 0,2 | - | 1 |

| | | | | | | |
|---|---|---|---|---|---|---|
| ¹⁾AO = Pentaerythriol-Tetrakis-(3-(3,5-di-tert-butyl-4-hydroxyphenyl)propionat) ²⁾MD = 2',3-Bis[[3-[3,5-di-tertbutyl-4-hydroxyphenyl]propionyl]]propionohydrazid Der zu 100 Gew.-% fehlende Anteil entspricht dem des Polypropylens. | | | | | | |

Die erhaltenen Kunststoffe wurden anschließend auf einem Spritzgussgerät, beispielsweise auf dem Arburg Allrounder, zu Prüfkörpern (125mm x 10 mm x 0,5 mm) verspritzt. Danach wurden diese den nachfolgend beschriebenen Prüfungen unterzogen.

### Beispiel 1: Thermostabilitätsprüfung WAP (Wärmealterungsprüfung) 140°C

Die Thermostabilitätsprüfung WAP wurde im Umlufttrockenschrank analog zur DIN 53383 bei 140°C durchgeführt. Die Probenkörper wurden mittels einer Klammer in den Trockenschrank eingehängt. Sobald ein Prüfkörper Abbauerscheinungen am Polymer in Form von braunen Stippen aufwies, wurde dieser aus dem Testprogramm entfernt. Die Zeit wurde notiert. Die Ergebnisse sind in Tabelle 2 wiedergegeben.

**Tabelle 2: Ergebnisse der Thermostabilitätsprüfung WAP 140°C**

| Rezeptur | | Ofenstandzeit [h] |
|---|---|---|
| 1 | 0-Probe PP | 1100 |
| 2 | PP/Talk | 150 |
| 3 | PP/Talk/ZnS | 150 |
| 4 | PP/Talk/AO/ZnS | 1050 |
| 5 | PP/Talk/AO/MD | 1400 |
| 6 | PP/Talk/AO/MD/ZnS | 1900 |

### Beispiel 2: Kombinierte Wasserbadlagerung 1500 h / 85 °C und Ofenalterung WAP 140°C

Die Prüfkörper wurden in VA-Reagenzglasständern aufrecht in einem elektrisch beheizten Bad mit vollentsalztem Wasser bei 85°C gelagert. Das Wasser wurde einmal wöchentlich ausgewechselt. Nach 1500 h im Wasserbad wurden die Probenkörper wie in Beispiel 1 beschrieben im Umlufttrockenschrank gelagert und geprüft. Die Ergebnisse sind in Tabelle 3 wiedergegeben.

**Tabelle 3: Ergebnisse der kombinierten Wasserbadlagerung 1500 h / 85 °C und Ofenalterung WAP 140°C**

| Rezeptur | | Ofenstandzeit [h] |
|---|---|---|
| 5 | PP/Talk/AO/MD | 400 |
| 6 | PP/Talk/AO/MD/ZnS | 600 |

### Beispiel 3: Wärmestabilitätsprüfung WAP 140°C mit Kupferkontakt

Zur Simulation einer Kabelanwendung wurden die Probenkörper mit Cu-Folie umwickelt und wie in Beispiel 1 beschrieben im Umlufttrockenschrank gelagert und geprüft. Die Ergebnisse sind in Tabelle 4 wiedergegeben.

**Tabelle 4: Ergebnisse der Wärmestabilitätsprüfung WAP 140°C mit Kupferkontakt**

| Versuch | | Ofenstandzeit [h] |
|---|---|---|
| 7 | PP/AO/MD | 2550 |
| 8 | PP/AO/MD/ZnS | 2850 |
| 9 | PP/AO/MD/ZnS (nano) | 5180 |

Weitere erfindungsgemäß bevorzugte thermoplastische Kunststoffe haben folgende Zusammensetzung:
75,25 Gew.-% PP, 20 Gew.-% Talkum, 0,15 Gew.-% Antioxidantien (polynucleare Phenole und Alkyldisulfid), 0,1 Gew.-% Metalldesaktivator (tris[2-tert-butyl-4-thio-(2'-methyl-4'-hydroxy-5'-tert-butyl)-phenyl-5-methyl]-phenyl phosphit) und 4,5 Gew.-% Sachtolith HD-S.

78,75 Gew.-% PP, 20 Gew.-% Talkum, 0,15 Gew.-% Antioxidantien (polynucleare Phenole und Alkyldisulfid), 0,1 Gew.-% Metalldesaktivator (tris[2-tert-butyl-4-thio-(2'-methyl-4'-hydroxy-5'-tert-butyl)-phenyl-5-methyl]-phenyl phosphit) und 1 Gew.-% ZnS (nano).

### Beispiel 4: Ofenalterung eines Styrol-Butadien-Kautschuks bei 150 °C

Es wurden fünf verschiedene Elastomer-Zusammensetzungen entsprechend der in Tabelle 5 aufgeführten Rezepturen hergestellt. Die einzelnen Komponenten wurden nacheinander auf einem 2-Walzen-Kalander in einem Temperaturbereich von 20 bis 80 °C gemischt. Es wurden die zur Bestimmung der Shore A Härte analog DIN 53505 erforderlichen Prüfköper aus dem Walzfell mit einer Schichtdicke von 6 mm gestanzt.

**Tabelle 5: Rezepturen SBR-Mischungen**

| Komponente | Mischung 1 | Mischung 2 | Mischung 3 | Mischung 4 | Mischung 5 |
|---|---|---|---|---|---|
| SBR (VSV5025-0HM) | 100 phr | | | | |
| Zinkoxid Aktiv | 2,5 phr | | | | |
| Edenor C18 (Stearinsäure) | 1 phr | | | | |
| Vulkacit CZ/CV (N-Cyclohexyl-2-benzothiazylsulfenamid) | 1,8 phr | | | | |
| Vulkacit D/C (Diphenylguanidin) | 2 phr | | | | |
| Mahlschwefel | 1,5 phr | | | | |
| Vulkanox HS/LG (2,2,4-Trimethyl-1,2-dihydrochinolin) | 0 phr | 1 phr | 1 phr | 1 phr | 1 phr |
| Vulkanox 4020/LG (N-(1,3-Dimethylbutyl)-N'-phenyl-p-phenylendiamin) | 0 phr | 1 phr | 1 phr | 1 phr | 1 phr |
| ZnS (nano) | 0 phr | 0 phr | 2 phr | 5 phr | 10 phr |

### Beispiel 5: Wärmestabilitätsprüfung WAP 150 °C mit Kupferkontakt

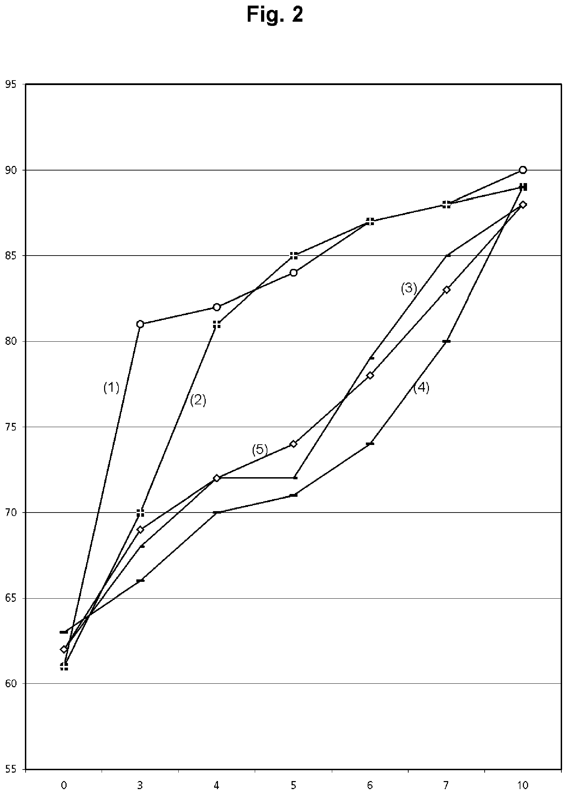

Die Thermostabilitätsprüfung WAP wurde in einem Umluftrockenschrank analog DIN 53383 bei 150 °C durchgeführt. Die Probekörper wurden mit Cu-Folie umwickelt und mittels einer Klammer in den Trockenschrank eingehängt. Nach 3, 4, 5, 6, 7 und 10 Tagen wurden die Probekörper aus dem Trockenschrank genommen, die Cu-Folie entfernt und die Shore A Härte analog DIN 53505 an der Stelle mit Cu-Kontakt bestimmt. Dabei ist eine höhere Shore A Härte ein Maß für die unerwünschte Versprödung des Werkstoffs. Die Ergebnisse sind in Tabelle 6 und Fig. 2 wiedergegeben.

**Tabelle 6: Shore A Härte nach Wärmealterung bei 150 °C**

| | Shore A Härte nach Wärmealterung bei 150°C | | | | | | |
|---|---|---|---|---|---|---|---|
| | Start | 3 d | 4 d | 5 d | 6 d | 7 d | 10 d |
| Mischung 1 | 61 | 81 | 82 | 84 | 87 | 88 | 90 |
| Mischung 2 | 61 | 70 | 81 | 85 | 87 | 88 | 89 |
| Mischung 3 | 62 | 68 | 72 | 72 | 79 | 85 | 88 |
| Mischung 4 | 63 | 66 | 70 | 71 | 74 | 80 | 89 |
| Mischung 5 | 62 | 69 | 72 | 74 | 78 | 83 | 88 |

| | | |
|---|---|---|
| Fig. 2: | Abszisse: | Zeit in Tagen; |
| | Ordinate: | Shore A Härte; |
| | (1): | Mischung 1; |
| | (2): | Mischung 2; |
| | (3): | Mischung 3; |
| | (4): | Mischung 4; |
| | (5): | Mischung 5 |

## Patentansprüche

1. Kunststoff ausgewählt aus der Gruppe bestehend aus thermoplastischen oder elastomeren Kunststoffen, **dadurch gekennzeichnet, dass** er Zinksulfid enthält, wobei das Zinksulfid eine mittlere Korngröße d₅₀ von 1 bis 50 nm und eine spezifische Oberfläche (BET) von 20 bis 300 m²/g hat.

2. Kunststoff nach Anspruch 1, **dadurch gekennzeichnet, dass** das Zinksulfid eine mittlere Korngröße d₅₀ von 3 bis 20 nm, bevorzugt von 5 bis 15 nm hat.

3. Kunststoff nach Anspruch 1 oder 2, **dadurch gekennzeichnet, dass** das Zinksulfid eine spezifische Oberfläche (BET) von 50 bis 180 m²/g hat.

4. Kunststoff nach mindestens einem der Ansprüche 1 bis 3, **dadurch gekennzeichnet, dass** das Zinksulfid eine anorganische und/oder eine organische Oberflächenmodifizierung besitzt.

5. Kunststoff nach mindestens einem der Ansprüche 1 bis 4, **dadurch gekennzeichnet, dass** die anorganische Oberflächenmodifizierung des Zinksulfids aus einer Verbindung besteht, die mindestens zwei der folgenden Elemente enthält: Aluminium, Antimon, Barium, Calcium, Cer, Chlor, Cobalt, Eisen, Phosphor, Kohlenstoff, Mangan, Sauerstoff, Schwefel, Silizium, Stickstoff, Strontium, Vanadium, Zink, Zinn, Zirkon.

6. Kunststoff nach mindestens einem der Ansprüche 1 bis 5, **dadurch gekennzeichnet, dass** die organische Oberflächenmodifizierung aus mindestens einer der folgenden Substanzklassen ausgewählt ist: Polyethern, Siloxanen, Polysiloxanen, Polycarbonsäuren, Polyestern, Polyamiden, Polyethylenglykolen, Polyalkoholen, Fettsäuren, bevorzugt ungesättigten Fettsäuren, Polyacrylaten.

7. Kunststoff nach mindestens einem der Ansprüche 1 bis 6, **dadurch gekennzeichnet, dass** das Zinksulfid mit einem Anteil von 0,1 bis 5 Gew.-%, bevorzugt 0,2 bis 2 Gew.-%, besonders bevorzugt 0,5 bis 1,5 Gew.-% im fertigen Kunststoff vorliegt.

8. Kunststoff nach mindestens einem der Ansprüche 1 bis 7, **dadurch gekennzeichnet, dass** es sich bei dem Kunststoff um einen thermoplastischen Kunststoff handelt.

9. Kunststoff nach mindestens einem der Ansprüche 1 bis 8, **dadurch gekennzeichnet, dass** der Thermoplast ausgewählt ist: aus Polyethylen (PE), Polypropylen (PP), Polybutylen (PB), Poylamid (PA), Poylvinylchlorid (PVC), Acrylnitril-Butadien-Styrol-Terpolymer (ABS), Polymethylmethacrylat (PMMA), Polycarbonat (PC), Polyoxymethylen (POM), Poylbutylenterephthalat (PBT), Polyurethan (PUR) oder Mischungen von mindestens zwei dieser Kunststoffe.

10. Kunststoff nach mindestens einem der Ansprüche 1 bis 9, **dadurch gekennzeichnet, dass** er 12 bis 99,8 Gew.-% Thermoplast, 0 bis 80 Gew.-% mineralischen Füllstoff, 0 bis 80 Gew.-% Flammschutzmittel, 0,05 bis 1,0 Gew.-% Antioxidant, 0,05 bis 2,0 Gew.-% organischen Metalldesaktivator und 0,1 bis 5 Gew.-%, bevorzugt 0,2 bis 2 Gew.-%, besonders bevorzugt 0,5 bis 1,5 Gew.-% Gew-% ZnS (nano) enthält.

11. Kunststoff nach mindestens einem der Ansprüche 1 bis 7, **dadurch gekennzeichnet, dass** es sich bei dem Kunststoff um einen elastomeren Kunststoff handelt.

12. Kunststoff nach mindestens einem der Ansprüche 1 bis 7 oder 11, **dadurch gekennzeichnet, dass** der Elastomer ausgewählt ist aus: Naturkautschuk (NR), Isopren-Kautschuk (IR), Butyl-Kautschuk (CIIR, BIIR), Butadien-Kautschuk (BR), Styrol-Butadien-Kautschuk (SBR), Acrylnitril-Butadien-Kautschuk (NBR), Brombutyl-Kautschuk (BIIR), Styrol-Butadien-Isopren-Kautschuk (SBIR), Chloropren-Kautschuk (CR), chlorsulfonierter Polyethylen-Kautschuk (CSM), hydrierter NBR-Kautschuk (HNBR), Polymethylsiloxan-Vinyl-Kautschuk (VMQ), Acrylat-Ethylen-Kautschuk (AEM), Acrylat-Kautschuk (ACM), Fluor-Kautschuk (FKM), Fluorsilikon-Kautschuk (FVMQ), thermoplastischen Elastomeren (TPE), thermoplastischen Elastomeren (TPE) auf Basis von Polyamid (TPA), auf Basis von Copolyestern (TPC), auf Basis von Olefinen (TPO), auf Basis von Styrol (TPS), auf Basis von Polyurethan (TPU), auf Basis von vernetztem Kautschuk (TPV) oder Mischungen von mindestens zwei dieser Kunststoffe.

13. Kunststoff nach mindestens einem der Ansprüche 1 bis 7 oder 11 bis 12, **dadurch gekennzeichnet, dass** er 100 phr Elastomer, 0 bis 10 phr Vulkanisationsbeschleuniger, 0 bis 10 phr Vulkanisationsverzögerer, 0 bis 20 phr Zinkoxid, 0 bis 10 phr Stearinsäure, 0 bis 20 phr Schwefel und/oder Peroxid, 0 bis 300 phr mineralischer Füllstoff, 0 bis 200 phr Weichmacher, 0 bis 30 phr protective system, enthaltend vorzugsweise Antioxidantien und Antiozonantien, und 0,1 bis 10 phr, bevorzugt 0,5 bis 7, besonders bevorzugt 2 bis 5 phr ZnS (nano) enthält.

14. Verwendung eines Kunststoffes nach mindestens einem der Ansprüche 1 bis 13 in thermisch belasteten Systemen.

15. Verwendung eines Kunststoffes nach mindestens einem der Ansprüche 1 bis 13 in Systemen, in denen der Kunststoff in unmittelbaren Kontakt mit Metall und/oder Wasser steht.

16. Verwendung eines Kunststoffes nach mindestens einem der Ansprüche 1 bis 13 zur Herstellung von Kabelisolierungen, Pumpengehäusen, Dichtungen und Schwingungsdämpfern, Warmwasserrohen, beispielsweise für Fußbodenheizungen, sowie Schläuchen in Waschmaschinen und Geschirrspülern.

17. Masterbatch zur Herstellung von Kunststoffen gemäß einem der Ansprüche 1 bis 13, **dadurch gekennzeichnet, dass** er Zinksulfid enthält, wobei das Zinksulfid eine mittlere Korngröße d₅₀ von 1 bis 50 nm und eine spezifische Oberfläche (BET) von 20 bis 300 m²/g hat.

18. Masterbatch zur Herstellung von Kunststoffen nach Anspruch 17, **dadurch gekennzeichnet, dass** das Zinksulfid eine mittlere Korngröße d₅₀ von 3 bis 20 nm, bevorzugt von 5 bis 15 nm hat.

19. Masterbatch, nach Anspruch 17 oder 18, **dadurch gekennzeichnet, dass** das Zinksulfid eine spezifische Oberfläche (BET) von 50 bis 180 m²/g hat.

20. Masterbatch, nach mindestens einem der Ansprüche 17 bis 19, **dadurch gekennzeichnet, dass** das Zinksulfid eine anorganische und/oder eine organische Oberflächenmodifizierung besitzt.

21. Masterbatch nach mindestens einem der Ansprüche 17 bis 20, **dadurch gekennzeichnet, dass** die anorganische Oberflächenmodifizierung des Zinksulfids aus einer Verbindung besteht, die mindestens zwei der folgenden Elemente enthält: Aluminium, Antimon, Barium, Calcium, Cer, Chlor, Cobalt, Eisen, Phosphor, Kohlenstoff, Mangan, Sauerstoff, Schwefel, Silizium, Stickstoff, Strontium, Vanadium, Zink, Zinn, Zirkon.

22. Masterbatch nach mindestens einem der Ansprüche 17 bis 21, **dadurch gekennzeichnet, dass** die organische Oberflächenmodifizierung aus mindestens einer der folgenden Substanzklassen ausgewählt ist: Polyethern, Siloxanen, Polysiloxanen, Polycarbonsäuren, Polyethern, Polyamiden, Polyethylenglykolen, Polyalkoholen, Fettsäuren, bevorzugt ungesättigten Fettsäuren, Polyacrylaten.

23. Masterbatch nach mindestens einem der Ansprüche 17 bis 22, **dadurch gekennzeichnet, dass** das Zinksulfid mit einem Anteil von 0,5 bis 25 Gew.-%, bevorzugt 1 bis 10 Gew.-%, besonders bevorzugt 2 bis 5 Gew.-% im Masterbatch vorliegt.

24. Verwendung eines Masterbatches nach mindestens einem der Ansprüche 17 bis 23 zur Herstellung eines Kunststoffes nach mindestens einem der Ansprüche 1 bis 13.

## Claims

1. Plastic selected from the group consisting of thermoplastic or elastomeric plastics, **characterized in that** it contains zinc sulphide, the zinc sulphide having an average grain size d₅₀ of 1 to 50 nm and a specific surface area (BET) of 20 to 300 m²/g.

2. Plastic according to claim 1, **characterized in that** the zinc sulfide has an average grain size d₅₀ of 3 to 20 nm, preferably of 5 to 15 nm.

3. Plastic according to claim 1 or 2, **characterized in that** the zinc sulfide has a specific surface area (BET) of 50 to 180 m²/g.

4. Plastic according to at least one of claims 1 to 3, **characterized in that** the zinc sulfide has an inorganic and/or an organic surface modification.

5. Plastic according to at least one of claims 1 to 4, **characterized in that** the inorganic surface modification of the zinc sulfide consists of a compound containing at least two of the following elements: aluminium, antimony, barium, calcium, cerium, chlorine, cobalt, iron, phosphorus, carbon, manganese, oxygen, sulphur, silicon, nitrogen, strontium, vanadium, zinc, tin, zirconium.

6. Plastic according to at least one of claims 1 to 5, **characterized in that** the organic surface modification is selected from at least one of the following substance classes: polyethers, siloxanes, polysiloxanes, polycarboxylic acids, polyesters, polyamides, polyethylene glycols, polyalcohols, fatty acids, preferably unsaturated fatty acids, polyacrylates.

7. Plastic according to at least one of claims 1 to 6, **characterized in that** the zinc sulphide is present in the finished plastic in a proportion of 0.1 to 5 wt.%, preferably 0.2 to 2 wt.%, particularly preferably 0.5 to 1.5 wt.%.

8. Plastic according to at least one of claims 1 to 7, **characterized in that** the plastic is a thermoplastic.

9. Plastic according to at least one of Claims 1 to 8, **characterized in that** the thermoplastic is selected from polyethylene (PE), polypropylene (PP), polybutylene (PB), polyamide (PA), polyvinyl chloride (PVC), acrylonitrile-butadiene-styrene terpolymer (ABS), polymethyl methacrylate (PMMA), polycarbonate (PC), polyoxymethylene (POM), polybutylene terephthalate (PBT), polyurethane (PUR) or mixtures of at least two of these plastics.

10. Plastic according to at least one of claims 1 to 9, **characterized in that** it contains 12 to 99.8% by weight of thermoplastic, 0 to 80% by weight of mineral filler, 0 to 80% by weight of flame retardant, 0.05 to 1.0% by weight of antioxidant, 0.05 to 2.0% by weight of organic metal deactivator and 0.1 to 5% by weight, preferably 0.2 to 2% by weight, particularly preferably 0.5 to 1.5% by weight of ZnS (nano).

11. Plastic according to at least one of claims 1 to 7, **characterized in that** the plastic is an elastomeric plastic.

12. Plastic according to at least one of claims 1 to 7 or 11, **characterized in that** the elastomer is selected from: natural rubber (NR), isoprene rubber (IR), butyl rubber (CIIR, BIIR), butadiene rubber (BR), styrene-butadiene rubber (SBR), acrylonitrile butadiene rubber (NBR), bromobutyl rubber (BIIR), Styrene-butadiene-isoprene rubber (SBIR), chloroprene rubber (CR), chlorosulfonated polyethylene rubber (CSM), hydrogenated NBR rubber (HNBR), polymethylsiloxane-vinyl rubber (VMQ), acrylate-ethylene rubber (AEM), Acrylate rubber (ACM), fluorine rubber (FKM), fluorosilicone rubber (FVMQ), thermoplastic elastomers (TPE), thermoplastic elastomers (TPE) based on polyamide (TPA), based on copolyesters (TPC), based on olefins (TPO), based on styrene (TPS), based on polyurethane (TPU), based on crosslinked rubber (TPV) or mixtures of at least two of these plastics.

13. Plastic according to at least one of claims 1 to 7 or 11 to 12, **characterized in that** it contains 100 phr elastomer, 0 to 10 phr vulcanization accelerator, 0 to 10 phr vulcanization retarder, 0 to 20 phr zinc oxide, 0 to 10 phr stearic acid, 0 to 20 phr sulfur and/or peroxide, 0 to 300 phr mineral filler, 0 to 200 phr plasticizer, 0 to 30 phr protective system, containing preferably antioxidants and antiozonants, and 0.1 to 10 phr, preferably 0.5 to 7, particularly preferably 2 to 5 phr ZnS (nano).

14. Use of a plastic according to at least one of claims 1 to 13 in thermally loaded systems.

15. Use of a plastic according to at least one of claims 1 to 13 in systems in which the plastic is in direct contact with metal and/or water.

16. Use of a plastic according to at least one of claims 1 to 13 for the production of cable insulations, pump housings, seals and vibration dampers, hot water pipes, for example for underfloor heating systems, and hoses in washing machines and dishwashers.

17. Masterbatch for the production of plastics according to one of claims 1 to 13, **characterized in that** it contains zinc sulphide, the zinc sulphide having an average grain size d₅₀ of 1 to 50 nm and a specific surface area (BET) of 20 to 300 m²/g.

18. The masterbatch for the production of plastics according to claim 17, **characterized in that** the zinc sulphide has an average grain size d₅₀ of 3 to 20 nm, preferably of 5 to 15 nm.

19. The masterbatch according to claim 17 or 18, **characterized in that** the zinc sulfide has a specific surface area (BET) of 50 to 180 m²/g.

20. The masterbatch according to at least one of claims 17 to 19, **characterized in that** the zinc sulfide has an inorganic and/or an organic surface modification.

21. The masterbatch according to at least one of claims 17 to 20, **characterized in that** the inorganic surface modification of the zinc sulphide consists of a compound containing at least two of the following elements: aluminium, antimony, barium, calcium, cerium, chlorine, cobalt, iron, phosphorus, carbon, manganese, oxygen, sulphur, silicon, nitrogen, strontium, vanadium, zinc, tin, zirconium.

22. The masterbatch according to at least one of claims 17 to 21, **characterized in that** the organic surface modification is selected from at least one of the following substance classes: polyethers, siloxanes, polysiloxanes, polycarboxylic acids, polyethers, polyamides, polyethylene glycols, polyalcohols, fatty acids, preferably unsaturated fatty acids, polyacrylates.

23. The masterbatch according to at least one of claims 17 to 22, **characterized in that** the zinc sulphide is present in the masterbatch in a proportion of 0.5 to 25 wt.%, preferably 1 to 10 wt.%, particularly preferably 2 to 5 wt.%.

24. Use of the masterbatch according to at least one of claims 17 to 23 for the production of a plastic according to at least one of claims 1 to 13.

## Revendications

1. Matière plastique, sélectionnée dans le groupe composé des matières thermoplastiques ou des matières plastiques élastomères, **caractérisée en ce qu'**elle contient du sulfure de zinc, le sulfure de zinc présentant une granulométrie moyenne d₅₀ de 1 à 50 nm et une surface spécifique (BET) de 20 à 300 m²/g.

2. Matière plastique selon la revendication 1, **caractérisée en ce que** le sulfure de zinc présente une granulométrie moyenne d₅₀ de 3 à 20 nm, de préférence de 5 à 15 nm.

3. Matière plastique selon la revendication 1 ou 2, **caractérisée en ce que** le sulfure de zinc présente une surface spécifique (BET) de 50 à 180 m²/g.

4. Matière plastique selon au moins l'une quelconque des revendications 1 à 3, **caractérisée en ce que** le sulfure de zinc comporte une modification de surface inorganique et/ou organique.

5. Matière plastique selon au moins l'une quelconque des revendications 1 à 4, **caractérisée en ce que** la modification de surface inorganique du sulfure de zinc est constituée d'un composé qui contient au moins deux des éléments suivants : l'aluminium, l'antimoine, le baryum, le calcium, le cérium, le chlore, le cobalt, le fer, le phosphore, le carbone, le manganèse, l'oxygène, le soufre, le silicium, l'azote, le strontium, le vanadium, le zinc, l'étain, le zircon.

6. Matière plastique selon au moins l'une quelconque des revendications 1 à 5, **caractérisée en ce que** la modification de surface organique est sélectionnée parmi au moins l'une des classes de substances suivantes : les polyéthers, les siloxanes, les polysiloxanes, les acides polycarboxyliques, les polyesters, les polyamides, les polyéthylènes glycols, les polyols, les acides gras, de préférence les acides gras insaturés, les polyacrylates.

7. Matière plastique selon au moins l'une quelconque des revendications 1 à 6, **caractérisée en ce que** le sulfure de zinc se présente dans une part de 0,1 à 5 % en poids, de préférence de 0,2 à 2 % en poids, de manière particulièrement préférentielle, de 0,5 à 1,5 % en poids dans la matière plastique finie.

8. Matière plastique selon au moins l'une quelconque des revendications 1 à 7, **caractérisée en ce que** la matière plastique est une matière thermoplastique.

9. Matière plastique selon au moins l'une quelconque des revendications 1 à 8, **caractérisée en ce que** la matière plastique est choisie parmi : un polyéthylène (PE), un polypropylène (PP), un polybutylène (PB), un polyamide (PA), un polychlorure de vinyle (PVC), un terpolymère d'acrylonitrile butadiène styrène (ABS), un poly(méthacrylate de méthyle) (PMMA), un polycarbonate (PC), un polyoxyméthylène (POM), un poly(téréphtalate de butylène) (PBT), un polyuréthane (PUR) ou des mélanges d'au moins deux desdites matières plastiques.

10. Matière plastique selon au moins l'une quelconque des revendications 1 à 9, **caractérisée en ce qu'**elle contient de 12 à 99,8 % en poids de matière thermoplastique, de 0 à 80 % en poids d'un agent de charge minéral, de 0 à 80 % en poids d'agent ignifuge, de 0,05 à 1,0 % en poids d'antioxydant, de 0,05 à 2,0 % en poids de désactivateur de métal organique et de 0,1 à 5 % en poids, de préférence de 0,2 à 2 % en poids, de manière particulièrement préférentielle, de 0,5 à 1,5 % en poids de Zns (nano).

11. Matière plastique selon au moins l'une quelconque des revendications 1 à 7, **caractérisée en ce que** la matière plastique est une matière plastique élastomère.

12. Matière plastique selon au moins l'une quelconque des revendications 1 à 7 ou 11, **caractérisée en ce que** l'élastomère est choisi parmi : un caoutchouc naturel (NR), un polyisoprène synthétique, (IR), un caoutchouc butyle (CIIR, BIIR), un polybutadiène (BR), un caoutchouc styrène-butadiène (SBR), un caoutchouc d'acrylonitrile-butadiène (NBR), un caoutchouc de bromobutyle (BIIR), un caoutchouc de styrène-butadiène-isoprène (SBIR), un caoutchouc chloroprène (CR), un caoutchouc de polyéthylène chlorosulfoné (CSM), un caoutchouc nitrile-butadiène hydrogéné (HNBR), un caoutchouc polyméthylsiloxane-vinyle(VMQ), un caoutchouc d'acrylate-éthylène (AEM), un caoutchouc d'acrylate (ACM), un caoutchouc fluoré (FKM), un caoutchouc fluorosiliconé (FVMQ), des élastomères thermoplastiques (TPE), des élastomères thermoplastiques (TPE) sur base de polyamide (TPA), sur base de co-polyesters (TPC), sur base d'oléfines (TPO), sur base de styrène (TPS), sur base de polyuréthane (TPU), sur base de caoutchouc réticulé (TPV) ou des mélanges d'au moins deux desdites matières plastiques.

13. Matière plastique selon au moins l'une quelconque des revendications 1 à 7 ou 11 à 12, **caractérisée en ce qu'**elle contient 100 phr d'élastomère, de 0 à 10 phr d'accélérateur de vulcanisation, de 0 à 10 phr de retardateur de vulcanisation, de 0 à 20 phr d'oxyde de zinc, de 0 à 10 phr d'acide stéarique, de 0 à 20 phr de soufre et/ou de peroxyde, de 0 à 300 phr d'agent de charge minéral, de 0 à 200 phr de plastifiant, de 0 à 30 phr de système protecteur, contenant de préférence des antioxydants et des antiozonants et de 0,1 à 10 phr, de préférence de 0,5 à 7, de manière particulièrement préférentielle de 2 à 5 phr de ZnS (nano).

14. Utilisation d'une matière plastique selon au moins l'une quelconque des revendications 1 à 13 dans des systèmes sous contrainte thermique.

15. Utilisation d'une matière plastique selon au moins l'une quelconque des revendications 1 à 13 dans des systèmes dans lesquels la matière plastique est en contact direct avec du métal et/ou de l'eau.

16. Utilisation d'une matière plastique selon au moins l'une quelconque des revendications 1 à 13 pour la fabrication d'isolations de câbles, de carters de pompes, de joints et d'amortisseurs de vibration, de tuyaux pour eau chaude, destinés par exemple à des chauffages au sol ainsi que de flexibles dans des lave-linge et des lave-vaisselle.

17. Mélange maître, destiné à fabriquer des matières plastiques selon l'une quelconque des revendications 1 à 13, **caractérisé en ce qu'**il contient du sulfure de zinc, le sulfure de zinc présentant une granulométrie moyenne d₅₀ de 1 à 50 nm et une surface spécifique (BET) de 20 à 300 m²/g.

18. Mélange maître, destiné à fabriquer des matières plastiques selon la revendication 17, **caractérisé en ce que** le sulfure de zinc présente une granulométrie moyenne d₅₀ de 3 à 20 nm, de préférence de 5 à 15 nm.

19. Mélange maître, selon la revendication 17 ou 18, **caractérisé en ce que** le sulfure de zinc présente une surface spécifique (BET) de 50 à 180 m²/g.

20. Mélange maître, selon au moins l'une quelconque des revendications 17 à 19, **caractérisé en ce que** le sulfure de zinc comporte une modification de surface inorganique et/ou organique.

21. Mélange maître selon au moins l'une quelconque des revendications 17 à 20, **caractérisé en ce que** la modification de surface inorganique du sulfure de zinc est constituée d'un composé qui contient au moins deux des éléments suivants : l'aluminium, l'antimoine, le baryum, le calcium, le cérium, le chlore, le cobalt, le fer, le phosphore, le carbone, le manganèse, l'oxygène, le soufre, le silicium, l'azote, le strontium, le vanadium, le zinc, l'étain, le zircon.

22. Mélange maître selon au moins l'une quelconque des revendications 17 à 21, la modification de surface organique est sélectionnée parmi au moins l'une des classes de substances suivantes : les polyéthers, les siloxanes, les polysiloxanes, les acides polycarboxyliques, les polyesters, les polyamides, les polyéthylènes glycols, les polyols, les acides gras, de préférence les acides gras insaturés, les polyacrylates.

23. Mélange maître selon au moins l'une quelconque des revendications 17 à 22, **caractérisé en ce que** le sulfure de zinc se présente dans une part de 0,5 à 25 % en poids, de préférence de 1 à 10 % en poids, de manière particulièrement préférentielle, de 2 à 5 % en poids dans la matière plastique finie.

24. Utilisation d'un mélange maître selon au moins l'une quelconque des revendications 17 à 23 pour la fabrication d'une matière plastique selon au moins l'une quelconque des revendications 1 à 13.
